# EUROPEAN PATENT APPLICATION

(11) **EP 4 632 323 A1**
(43) Date of publication of application: **15.10.2025**
(21) Application number: 25164435.7
(22) Date of filing: 18.03.2025
(51) Int. Cl.: G01C 19/72, G02B 6/00

(54) **TECHNIQUES FOR INCREASING ROUND TRIP PATH LENGTH THROUGH AN OPTICAL RESONATOR COIL WITHOUT SUBSTANTIALLY INCREASING OPTICAL RESONATOR COIL SIZE**

(30) Priority: 12.04.2024 US 202418634596
(71) Applicant: Honeywell International Inc., Charlotte, NC 28202 (US)
(72) Inventor: PUCKETT, Matthew Wade, Charlotte, 28202 (US); WU, Jianfeng, Charlotte, 28202 (US); TIN, Steven, Charlotte, 28202 (US); QIU, Tiequn, Charlotte, 28202 (US)
(74) Representative: Haseltine Lake Kempner LLP

(57) **Abstract**

An optical resonator with increased free spectral range and substantially no increase in volume is provided. The optical resonator includes N winding optical waveguides where each n-1 winding optical waveguide is within a corresponding n winding optical waveguide and N is an integer greater than one. The n-1 and n winding optical waveguides are optically coupled by an optical coupler having substantially one hundred percent optical coupling.

## Description

### BACKGROUND

An optical resonator coil may be used in optical applications such as optical gyroscopes. Increasing the round trip path length through the optical resonator coil can improve performance of an optical applications utilizing the optical resonator coil. Conventionally, increasing round trip path length requires more winding of the optical resonator coil. The addition of more windings increases coil size which is undesirable for many applications where space is limited.

### SUMMARY

In some aspects, the techniques described herein relate to an optical resonator including: a first optical waveguide including a first input/output port and a first surface; a second optical waveguide including a second input/output port and a second surface; a resonator coil of optical waveguide including a first winding optical waveguide including a first waveguide port, a second waveguide port, a third surface adjacent and opposite to the first surface, and a fourth surface adjacent and opposite to the second surface, a second winding optical waveguide including a third waveguide port and a fourth waveguide port, and a first optical coupler including a first coupler port, a second coupler port, a third coupler port, and a fourth coupler port; and wherein the second winding optical waveguide is within a first region surrounded at least in part by the first winding optical waveguide; wherein the first waveguide port is optically coupled to the first coupler port, wherein the second waveguide port is optically coupled to the fourth waveguide port, wherein the third waveguide port is optically coupled to the third coupler port, and wherein the fourth waveguide port is optically coupled to the fourth coupler port; wherein the first optical coupler is configured to optically couple an optical energy between the first and the second coupler ports and between the third and the fourth coupler port; wherein the first optical coupler is inserted anywhere in and around the first winding optical waveguide except for where the third surface is adjacent and opposite to the first surface, where the fourth surface where is adjacent and opposite to the second surface.

In some aspects, the techniques described herein relate to a method for decreasing free spectral range in an optical resonator, the method including: optically coupling a portion of an optical signal to a first winding optical waveguide of a resonator coil including at least two winding optical waveguides; propagating the portion of the optical signal around at least a part of the first winding optical waveguide; optically coupling a portion of the portion of the optical signal from the first winding optical waveguide to a second winding optical waveguide of the resonator coil; propagating the portion of the portion of the optical signal around at least a part of the second winding optical waveguide; and optically coupling a portion of the portion of the portion of the optical signal from the second winding optical waveguide to the first winding optical waveguide.

In some aspects, the techniques described herein relate to an optical gyroscope including: an optical source including at least one laser and configured to emit at least one optical signal; an optical resonator including a rotation axis around which the optical gyroscope is configured to rotate; opto-electronic circuitry includes at least one optical detector and is configured to receive the at least one optical signal, to optically couple to the optical resonator a gyroscope portion of each of the at least one optical signal, and to receive at least one gyroscope optical signal each of which is derived from the gyroscope portion; wherein the opto-electronic circuitry is further configured to generate, using the at least one gyroscope optical signal, an electronic signal representative of a parameter from which a rate of rotation of the optical gyroscope around the rotation axis; and processing circuitry electrically coupled to the opto-electronic circuitry and configured to receive the electronic signal and to determine the rate of rotation of the optical gyroscope around the rotation axis using the electronic signal; wherein the optical resonator includes: a first optical waveguide including a first input/output port and a first surface; a second optical waveguide including a second input/output port and a second surface; wherein at least one of the first and the second input/output ports is configured to receive each of the gyroscope portion of each of the at least one optical signal, and wherein at least one of the first and the second input/output ports is configured to emit each of the at least one gyroscope optical signal; a resonator coil of optical waveguide including a first winding optical waveguide including a first waveguide port, a second waveguide port, a third surface adjacent and opposite to the first surface, and a fourth surface adjacent and opposite to the second surface, a second winding optical waveguide including a third waveguide port and a fourth waveguide port, and a first optical coupler including a first coupler port, a second coupler port, a third coupler port, and a fourth coupler port; and wherein the second winding optical waveguide is within a first region surrounded at least in part by the first winding optical waveguide; wherein the first waveguide port is optically coupled to the first coupler port, wherein the second waveguide port is optically coupled to the fourth waveguide port, wherein the third waveguide port is optically coupled to the third coupler port, and wherein the fourth waveguide port is optically coupled to the fourth coupler port; wherein the first optical coupler is configured to optically couple optical energy between the first and the second coupler ports and between the third and the fourth coupler port; wherein the first optical coupler is inserted anywhere in and around the first winding optical waveguide except for where the third surface is adjacent and opposite to the first surface, and where the fourth surface where is adjacent and opposite to the second surface.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a diagram of one embodiment of an optical resonator according to embodiments of the invention;
FIG. 1B illustrates a diagram of one embodiment of an optical coupler;
FIG. 1C illustrates a diagram of another embodiment of an optical resonator according to embodiments of the invention;
FIG. 2 illustrates a block diagram of one embodiment of an optical gyroscope implemented with an optical resonator according to embodiments of the invention; and
FIG. 3 illustrates a flow diagram of one embodiment of a method for decreasing free spectral range of an optical resonator.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and/or electrical changes may be made. Furthermore, each method presented in the drawing figures and the specification is not to be construed as limiting the order in which the individual steps may be performed. The following detailed description is not to be taken in a limiting sense.

Techniques disclosed herein increase a path length of an optical resonator formed on a surface area, *e.g.,* of an integrated circuit, with two or more nonoverlapping winding optical waveguides. Each successive winding optical waveguide is sequentially nested within a preceding optical waveguide to which it is optically coupled. A winding optical waveguide is optically coupled, by an optical coupler, to another winding optical waveguide nested within and adjacent to the winding optical waveguide. Optionally, each winding optical waveguide has a circular, an oval, or an elliptical shape. For an optical resonator including N winding optical waveguides, the optical resonator will utilize N-1 optical couplers each of which is used to optically couple two such adjacent winding optical waveguides. N is an integer greater than one and represents a number of winding optical waveguides used to form the optical resonator. Optionally, N is greater than 10, 25, 50, 100, 200, 300, or 400.

Each optical coupler includes two optical waveguides, each of which has a coupling surface and two ports so that each coupler has two coupling surfaces and four ports. The two coupling surfaces are close to each other, allowing light waves propagating in the waveguides to be coupled from one waveguide to the other waveguide across the coupling surfaces which are adjacent to one another. The ports of the coupler are optically connected to the adjacent winding optical waveguides. As the number of nested winding optical waveguides is increased, so to is the path length of the optical resonator.

Exemplary embodiments of the invention include an optical resonator including a resonator coil of optical waveguide, a first optical waveguide optically coupled to the resonator coil of optical waveguide and including a first port and a first surface, a second optical waveguide optically coupled to the resonator coil of optical waveguide and including a second port and a second surface. The resonator coil of optical waveguide includes a first winding optical waveguide including a first waveguide port, a second waveguide port, a third surface adjacent and opposite to the first surface, and a fourth surface adjacent and opposite to the second surface, a second winding optical waveguide comprising a third waveguide port and a fourth waveguide port, and an optical coupler including a first coupler port, a second coupler port, a third coupler port, and a fourth coupler port. The second winding optical waveguide is within a region surrounded at least in part by the first winding optical waveguide. Optionally, each winding optical waveguide has a circular, an oval, or an elliptical shape.

An optical coupler which couples an exterior, *e*.*g*., the first, winding optical waveguide, to an interior, *e*.*g*., the second, winding optical waveguide may be inserted, *e*.*g*., between the first and the second waveguide ports, anywhere on the exterior winding optical waveguide except overlapping the third surface where it is adjacent and opposite to the first surface, and overlapping the fourth surface where it is adjacent and opposite to the second surface. Further, the optical coupler may not be located so that it overlaps another coupler, *e*.*g*., coupling the interior winding optical waveguide to yet another optical waveguide nested within the interior winding optical waveguide. Each pair of N winding optical waveguides coupled by one of N-1 optical couplers in the manner described above.

The first waveguide port is optically coupled to the first coupler port. The second waveguide port is optically coupled to the second coupler port. The third waveguide port is optically coupled to the third coupler port. The fourth waveguide port is optically coupled to the fourth coupler port. A portion of an optical signal propagating into the first or the second coupler port is configured to be optically coupled to respectively fourth or the third coupler port. A portion of an optical signal propagating into the fourth or the third coupler port is configured to be optically coupled to respectively the first or the second coupler port.

Optionally, each optical waveguide and each optical coupler are implemented with planar optical waveguide, optical fiber, or another type of optical waveguide. Optionally, the optical resonator, and each component thereof, is implemented in a planar format.

Embodiments of the invention facilitate increasing the optical path length of an optical resonator, *e*.*g*., the resonator coil, without increasing a cross-sectional area, *e.g.,* a radius, or volume of the optical resonator, *e.g.,* resonator coil. Embodiments of the invention are implemented without requiring optical waveguide of the optical resonator, *e*.*g*., the resonator coil to cross over itself, and thus may be implemented in a planar, *e.g.,* a substantially two dimensional, format, *e.g.,* using conventional planar optical waveguide and processes for fabricating the same.

Due to increases optical path length, a free spectral range of the optical resonator is decreased and a density of resonances is increased. When embodiments of the invention are used in an optical system, *e*.*g*., a broadband optical gyroscope, the decreased free spectral range can improve a sensitivity of the optical system.

Further, due to the decreased free spectral range and a substantially constant finesse, embodiments of the invention have a higher quality factor which results in optical signals with lower line widths. Substantially constant finesse may be obtained by utilizing optical coupler(s) with substantially zero loss. When the embodiments of the invention are used in an optical system, *e*.*g*., a resonant fiber optic gyroscope or the broadband optical gyroscope, the lower line width of an optical signal improves the sensitivity of the optical system.

Even if quality factor is not increased, embodiments of the invention which are an optical resonator with a lower free spectral range allow for the optical resonator to have a lower finesse. As a result, an optical resonator provides a filtered optical signal with a lower phase noise due to reduced Kerr effect as a result of the lower finesse.

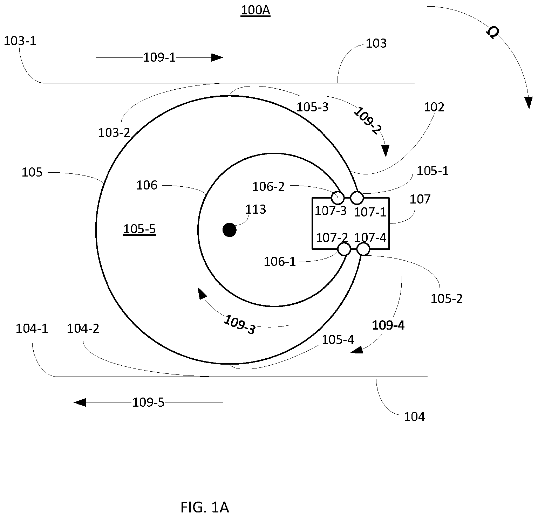

FIG. 1A illustrates a diagram of one embodiment of an optical resonator 100A according to embodiments of the invention. FIG. 1A illustrates an embodiment of the invention where N equals two. Optionally, the optical resonator 100A includes an axis of rotation (or rotation axis) 113 around which the optical resonator 100A (and optionally a system including the optical resonator 100A) is configured to rotate, *e.g.*, at a rotation rate Ω.

The optical resonator 100A includes a resonator coil of optical waveguide 102, a first optical waveguide 103 including a first port 103-1 and a first surface 103-2, a second optical waveguide 104 optically including a second port 104-1 and a second surface 104-2. The resonator coil of optical waveguide 102 includes (a) a first winding optical waveguide 105 including a first waveguide port 105-1, a second waveguide port 105-2, a third surface 105-3 adjacent and opposite to the first surface 103-2, and a fourth surface 105-4 adjacent and opposite to the second surface 104-2, (b) a second winding optical waveguide 106 comprising a third waveguide port 106-1 and a fourth waveguide port 106-2, and (c) an optical coupler 107 including a first coupler port 107-1, a second coupler port 107-2, a third coupler port 107-3, and a fourth coupler port 107-4. The second winding optical waveguide 106 is within a region 105-5 surrounded in at least part by the first winding optical waveguide 105. The optical coupling efficiency (i) reciprocally between the first coupler port 107-1 and the second optical coupler port 107-2 and (ii) reciprocally between the third coupler port 107-3 and the fourth coupler port 107-4 is almost or equal to one hundred percent, *e*.*g*., greater than 99.9 percent.

FIG. 1A illustrates for pedagogical purposes a portion of an optical signal 109-1 propagating from the first port 103-1 of the first optical waveguide 103 to the second port 104-1 of the second optical waveguide 104. However, alternatively or at the same time, a portion of another optical signal (or another portion of the optical signal) may propagate from the second port 104-1 of the second optical waveguide 104 to the first port 103-1 of the first optical waveguide 103.

The optical signal 109-1 is received at the first port 103-1 of the first optical waveguide 103. A portion of an optical signal 109-1 (or first portion 109-2) is optically coupled from the first optical waveguide 103 to the resonator coil of optical waveguide 102, *e.g.,* the first winding optical waveguide 105, about where the third surface 105-3 adjacent opposite to the first surface 103-2. The first portion 109-2 is only a small portion (*e*.*g*., between one to ten percent and which may be substantially equal to a percentage of round trip power loss in the resonator coil of optical waveguide 102) of the optical signal 109-1. The first portion 109-2 propagates around part of the first winding optical waveguide 105 and into the first coupler port 107-1 of the optical coupler 107. All or substantially all of the first portion 109-2, *e.g.*, greater than 99.9 percent, is optically coupled, with the optical coupler 107, from the first coupler port 107-1 to the second coupler port 107-2 of the optical coupler 107 (from the first coupler port 107-1) and, thus, to the second winding optical waveguide 106. The portion of the first portion 109-2 optically coupled to the second winding optical waveguide 106 is referred to as the second portion 109-3.

The second portion 109-3 propagates around the second winding optical waveguide 106 to the third coupler port 107-3 of the optical coupler 107. All or substantially all of the second portion 109-3, *e.g.*, greater than 99.9 percent, with the optical coupler 107, to the fourth coupler port 107-4 of the optical coupler 107 (from the third coupler port 107-3) and thus to the first winding optical waveguide 105. The portion of the second portion 109-3 optically coupled to the second winding optical waveguide 106 is referred to as the third portion 109-4.

The third portion 109-4 propagates around another portion of the first winding optical waveguide 105. A portion, *e.g.*, a small portion¹ (for example, of the third portion 109-4 (or the fourth portion 109-5) is optically coupled to the second optical waveguide 104 from the resonator coil of optical waveguide 102, *e.g.*, the first winding optical waveguide 105, about where the fourth surface 105-4 is adjacent and opposite to the second surface 104-2; the fourth portion 109-5 is subsequently emitted from the second port 104-1.
¹ *e*.*g*., between one to ten percent and which may be substantially equal to a percentage of round trip power loss in the resonator coil of optical waveguide 102.

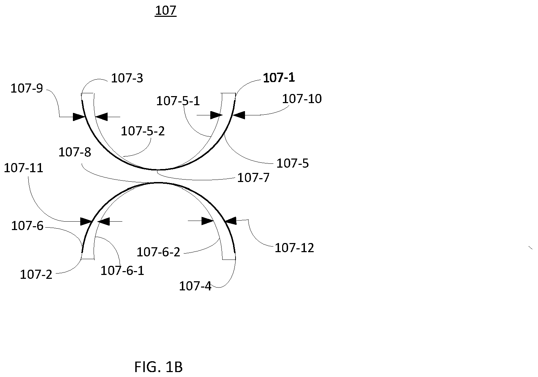

FIG. 1B illustrates a diagram of one embodiment of an optical coupler 107. The optical coupler 107 includes a first coupler optical waveguide 107-5 including a first coupler surface 107-7 and a second coupler optical waveguide 107-6 including a second coupler surface 107-8. The first and the second coupler surfaces 107-7, 107-8 are adjacent and opposite to one another. An optical signal injected into the first port 107-1 is optically coupled, about where the first and the second coupler surfaces 107-7, 107-8 are adjacent and opposite, from the first coupler optical waveguide 107-5 to the second coupler optical waveguide 107-6, to the second coupler port 107-2. An optical signal injected into the second coupler port 107-2 would be coupled to the first coupler port 107-2 in a reverse manner. An optical signal injected into the third coupler port 107-3 is optically coupled, about where the first and the second coupler surfaces 107-7, 107-8 are adjacent and opposite, from the first coupler optical waveguide 107-5 to the second coupler optical waveguide 107-6, to the fourth coupler port 107-2. An optical signal injected into the fourth coupler port 107-4 would be coupled to the third coupler port 107-3 in a reverse manner. The optical coupler 107 has substantially one hundred percent, *e*.*g*., greater than 99.9 percent optical coupling between the first and the second coupler ports 107-1, 107-2 and between the third and the fourth coupler ports 107-3, 107-4.

The optical coupler 107 has a high coupling efficiency due to an adiabatic taper in a width (or diameter) 107-9, 107-10, 107-11, 107-12 of each of a first half 107-5-1, 107-6-1 and a second half 107-5-2, 107-6-2 of each of the first and the second coupler optical waveguides 107-5, 107-6. The adiabatic taper occurs over a length of each half 107-5-1, 107-5-2, 107-6-1, 107-6-2. For pedagogical purposes, the length of the adiabatic taper is illustrated from by a coupler port 107-1, 107-2, 107-3, 107-4 to by a coupler surface 107-7, 107-8; however, in other embodiments, the adiabatic taper may occur over a portion of the length from by a coupler port to by a coupler surface. The width (or diameter) 107-9, 107-10, 107-11, 107-12 4 of a half (of a coupler optical waveguide) 107-5-1, 107-5-2, 107-6-1, 107-6-2 is substantially greater, *e*.*g*., greater than at least ten percent, by each coupler port 107-1, 107-2, 107-3, 107-4 than by a coupler surface 107-7, 107-8 to which a coupler port is optically connected by the half of the coupler optical waveguide. Optionally, the adiabatic transition occurs over a length of each half 107-5-1, 107-5-2, 107-6-1, 107-6-2 of at least several tens of wavelengths of the optical signal, *e*.*g*., several hundreds of microns.

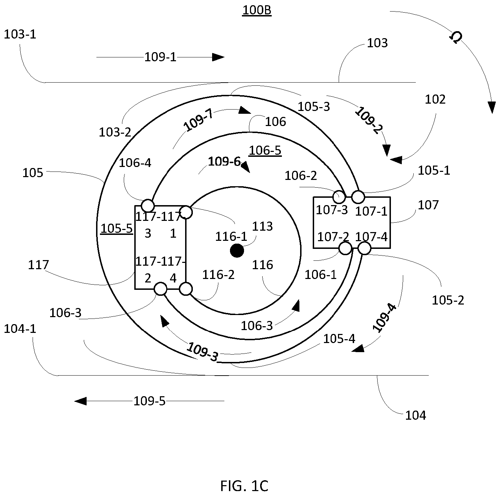

FIG. 1C illustrates a diagram of another embodiment of an optical resonator 100B according to embodiments of the invention. FIG. 1C illustrates an embodiment of the invention where N equals three. The optical resonator 100B of FIG. 1C is similar to the optical resonator 100A of FIG. 1A except that the second winding optical waveguide 106 further includes a fifth waveguide port 106-3 and a sixth waveguide port 106-4, and the optical resonator 100B of FIG. 1C further includes a third winding optical waveguide 116 comprising a seventh waveguide port 116-1 and an eighth waveguide port 116-2, and a second optical coupler 117 including a fifth coupler port 117-1, a sixth coupler port 117-2, a seventh coupler port 117-3, and an eighth coupler port 117-4.

The third winding optical waveguide 116 is within a region 106-5 surrounded in at least part by the second winding optical waveguide 106. The second optical coupler 117 may be located anywhere around the second winding optical waveguide 106, except where it overlaps another optical coupler, *e.g.*, the first optical coupler 107.

The fifth and the sixth waveguide ports 106-3, 106-4 are optically coupled respectively to the sixth and seventh coupler ports 117-2, 117-3. The seventh and the eighth waveguide ports 116-1, 116-2 are optically coupled to respectively the fifth and the eighth coupler ports 117-1, 117-4.

The operation of the other optical resonator 100B differs from the operation of the optical resonator 100A as follows. The second portion 109-3 propagates around a portion of the second winding optical waveguide 106. A portion² of the second portion 109-3 (or the fifth portion 109-6) is optically coupled from the second winding optical waveguide 106, by the second optical coupler 117 from the sixth coupler port 117-2 to the fifth coupler port 117-1, to the third winding optical waveguide 116. The fifth portion propagates around the third winding optical waveguide 116. A portion³ of the fifth portion (or the sixth portion 109-7) is optically coupled to the second winding optical waveguide 106 by the second optical coupler 117 from the eighth coupler port 117-4 to the seventh coupler port 117-3. The sixth portion 109-7 propagates around another portion of the second winding optical
² *E*.*g*., substantially all.
³ *E*.*g*., substantially all. waveguide 106. A portion⁴ of the fifth portion (or the third portion 109-4) is optically coupled to another portion of the first winding optical waveguide 105 by the optical coupler (or first optical coupler) 107 from the third coupler port 107-3 to the fourth coupler port 107-4.
⁴ *E*.*g*., substantially all.

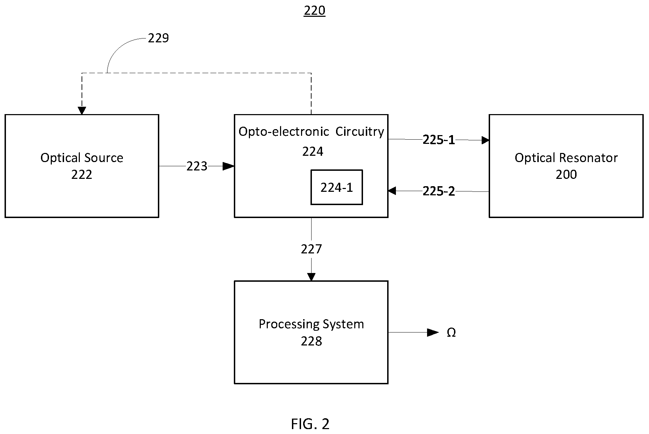

FIG. 2 illustrates a block diagram of one embodiment of an optical gyroscope 220 implemented with an optical resonator according to embodiments of the invention. The optical gyroscope 220 may be (a) a narrow band optical gyroscope, such as a resonant fiber optical gyroscope, utilizing narrow band optical signal(s), or (b) a broadband optical gyroscope, such as resonant waveguide gyroscope utilizing broadband optical signals(s).

The optical gyroscope 220 includes an optical source 222, opto-electronic circuitry 224, the optical resonator 200 according to embodiments of the invention, and a processing system (or processing circuitry) 228. Optionally, the optical resonator 200 according to embodiments of the invention is implemented as in part or in whole according to embodiments illustrated in FIGS. 1A, 1B, and/or 1C.

The optical source 222 is configured to produce one or more narrow band, *e.g.*, 10 KHz line width, optical signals or one or more broadband, *e.g.*, *e.g.*, greater than one nm in width for example 30 nm in width, optical signals which may be continuous in a frequency spectrum or formed periodically such as with a frequency comb, and includes one or more lasers. The opto-electronic circuitry 224 includes at least one optical detector 224-1 and is configured to receive such at least one broadband or narrow band optical signal 223, optically couple a gyroscope portion 225-1 of each such at least one broadband or narrow band optical signal 223 to the optical resonator 200, and receive, from the optical resonator 200, at least one gyroscope optical signal 225-2 each of which is derived from one of the gyroscope portions 225-1. The opto-electronic circuitry 224 is further configured to generate, using each of the at least one gyroscope optical signal 225-2, an electronic signal 227 representative of a parameter from which a rate of rotation Ω of the optical resonator 200 around a rotation axis of the optical resonator 200. Optionally, the opto-electronic circuitry 224 may include one or more of: optical circulator(s), optical phase modulator(s), mixer(s), and function generator(s). Optionally, the opto-electronic circuitry 224 is configured to generate at least one control signal 229 configured to control an amplitude and/or a carrier frequency of each of the at least one broadband or narrow band optical signal 223; such optional at least one control signal 229 is configured to be transmitted from the opto-electronic circuitry 224 and received by the optical source 222. Optionally, each of the at least one optical detector 224-1 is a photodetector configured to convert an optical power level incident upon the photodetector to an electrical signal representative of such incident optical power level.

The processing system 228 is configured to receive the electronic signal 227 and determine a rate of rotation of the optical gyroscope 220, *e.g.,* the optical resonator 200, around the rotation axis of the optical resonator.

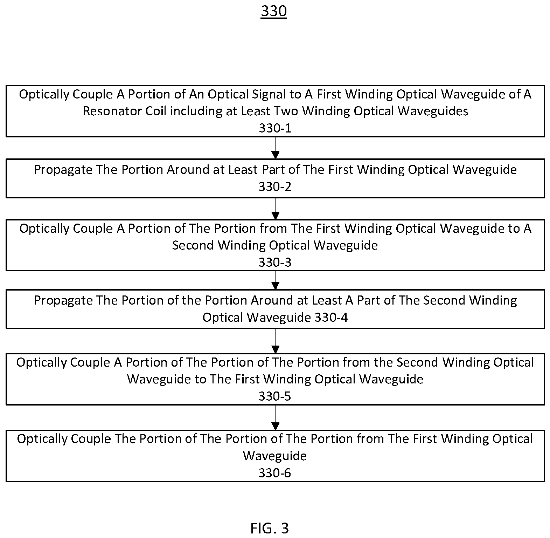

FIG. 3 illustrates a flow diagram of one embodiment of a method 330 for decreasing free spectral range of an optical resonator. The methods illustrated herein may be implemented with the apparatuses illustrated and described with respect to Figures 1A, 1B, and/or 1C, but may be implemented in other ways as well.

The blocks of the flow diagrams have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

In block 330-1, a portion of an optical signal (the "portion") is optically coupled, *e.g.*, from a first optical waveguide to a first winding optical waveguide of a resonator coil, *e*.*g*., including N winding optical waveguides where N is an integer greater than one. Optionally, the optical signal is received, *e.g.*, by the first optical waveguide.

In block 330-2, the portion is propagated around at least part of the first winding optical waveguide. In block 330-3, a portion of the portion is optically coupled, *e*.*g*., through an optical coupler, from the first winding optical waveguide to a second winding optical waveguide. In block 330-4, the portion of the portion is propagated around at least a part of the second winding optical waveguide.

In block 330-5, a portion of the portion of the portion⁵ is optically coupled, *e.g.*, through the optical coupler, from the second winding optical waveguide to the first winding optical waveguide. In block 330-6, the portion of the portion of the portion is optically coupled from the first winding optical waveguide, *e*.*g*., to the first or a second optical waveguide.
⁵ Such portion of the portion of the portion of the optical signal may be extracted through one or more couplers from the portion of the portion depending upon whether or not there are more than two winding optical waveguides. Thus, the portion of the portion of the optical signal is provided through a series of one or more optical couplers the first of which is configured to receive the portion of the optical signal.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (*e.g.*, a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

### Example Embodiments

Example 1 includes an optical resonator comprising: a first optical waveguide comprising a first input/output port and a first surface; a second optical waveguide comprising a second input/output port and a second surface; a resonator coil of optical waveguide comprising a first winding optical waveguide comprising a first waveguide port, a second waveguide port, a third surface adjacent and opposite to the first surface, and a fourth surface adjacent and opposite to the second surface, a second winding optical waveguide comprising a third waveguide port and a fourth waveguide port, and a first optical coupler comprising a first coupler port, a second coupler port, a third coupler port, and a fourth coupler port; and wherein the second winding optical waveguide is within a first region surrounded at least in part by the first winding optical waveguide; wherein the first waveguide port is optically coupled to the first coupler port, wherein the second waveguide port is optically coupled to the fourth waveguide port, wherein the third waveguide port is optically coupled to the third coupler port, and wherein the fourth waveguide port is optically coupled to the fourth coupler port; wherein the first optical coupler is configured to optically couple an optical energy between the first and the second coupler ports and between the third and the fourth coupler port; wherein the first optical coupler is inserted anywhere in and around the first winding optical waveguide except for where the third surface is adjacent and opposite to the first surface, where the fourth surface where is adjacent and opposite to the second surface.

Example 2 includes the optical resonator of Example 1, wherein the first optical coupler is inserted anywhere in and around the second winding optical waveguide except for where the first optical coupler would overlap another optical coupler optically connected to the second winding optical waveguide.

Example 3 includes the optical resonator of any of Examples 1-2, wherein at least a portion of an optical signal received at the first or the second input/output port is emitted respectively from the second or the first input/output port.

Example 4 includes the optical resonator of any of Examples 1-3, wherein at least one of the first and the second optical waveguides and the first and the second winding optical waveguides comprises planar optical waveguide or optical fiber.

Example 5 includes the optical resonator of any of Examples 1-4, wherein the first optical coupler comprises: a first coupler optical waveguide comprising the first coupler port, the fourth coupler port, and a first coupler surface, wherein the first and the third coupler ports are opposite one another on the first coupler optical waveguide; wherein a width of the first coupler optical waveguide adiabatically tapers at or after the first coupler port and at or after the fourth coupler port and towards the first coupler surface; and a second coupler optical waveguide comprising the second coupler port, the third coupler port, and a second coupler surface, wherein the second and the fourth coupler ports are opposite one another on the second coupler optical waveguide; wherein a width of the second coupler optical waveguide adiabatically tapers at or after the second coupler port and at or after the third coupler port and towards the second coupler surface; wherein the first coupler surface is adjacent to and opposite of the second coupler surface.

Example 6 includes the optical resonator of any of Examples 1-5, wherein each winding optical waveguide has an oval or an elliptical shape.

Example 7 includes the optical resonator of any of Examples 1-6, further comprising: a third winding optical waveguide comprising a seventh waveguide port and an eighth waveguide port; a second optical coupler comprising a fifth coupler port, a sixth coupler port, a seventh coupler port, and an eighth coupler port; and wherein the second winding optical waveguide further comprises a fifth waveguide port and a sixth waveguide port; wherein the fifth waveguide port is optically coupled to the sixth coupler port, and the sixth waveguide port is optically coupled the seventh coupler port; wherein the seventh waveguide port is optical coupled to the fifth coupler port and the eighth waveguide port is optically coupled to the eighth coupler port; wherein the first optical coupler is configured to optically couple optical power between the fifth and the sixth coupler ports and between the seventh and the eighth coupler port; wherein the third winding optical waveguide is within a second region defined surrounded in at least part by the second winding optical waveguide; wherein the second optical coupler is inserted anywhere around the second winding optical waveguide except where the second optical coupler would overlap the first optical coupler.

Example 8 includes the optical resonator of Example 7, wherein the second optical coupler comprises: a third coupler optical waveguide comprising the fifth coupler port, the eighth coupler port, and a third coupler surface, wherein the fifth and the eighth coupler ports are opposite one another on the third coupler optical waveguide; wherein a width of the third coupler optical waveguide adiabatically tapers at or after the fifth coupler port and at or after the eighth coupler port and towards the third coupler surface; and a fourth coupler optical waveguide comprising the sixth coupler port, the seventh coupler port, and a fourth coupler surface, wherein the sixth and the seventh coupler ports are opposite one another on the fourth coupler optical waveguide; wherein a width of the fourth coupler optical waveguide adiabatically tapers at or after the sixth coupler port and at or after the seventh coupler port and towards the fourth coupler surface; wherein the third coupler surface is adjacent to and opposite of the fourth coupler surface.

Example 9 includes a method for decreasing free spectral range in an optical resonator, the method comprising: optically coupling a portion of an optical signal to a first winding optical waveguide of a resonator coil including at least two winding optical waveguides; propagating the portion of the optical signal around at least a part of the first winding optical waveguide; optically coupling a portion of the portion of the optical signal from the first winding optical waveguide to a second winding optical waveguide of the resonator coil; propagating the portion of the portion of the optical signal around at least a part of the second winding optical waveguide; and optically coupling a portion of the portion of the portion of the optical signal from the second winding optical waveguide to the first winding optical waveguide.

Example 10 includes the method of any of Example 9, wherein the portion of the portion of the optical signal is provided through a series of one or more optical couplers a first of which is configured to receive the portion of the optical signal.

Example 11 includes the method of any of Examples 9-10, further comprising: receiving the optical signal at a first optical waveguide comprising a first surface; emitting a portion of the portion of the portion of the portion of the optical signal from a second optical waveguide comprising a second surface; and wherein the first winding optical waveguide comprises a third surface and a fourth surface, wherein the third surface is adjacent and opposite to the first surface and the fourth surface is adjacent and opposite to the second surface; wherein the optical coupling is performed by an optical coupler is inserted anywhere in and around the first winding optical waveguide except for where the third surface is adjacent and opposite to the first surface, and where the fourth surface where is adjacent and opposite to the second surface.

Example 12 includes an optical gyroscope comprising: an optical source comprising at least one laser and configured to emit at least one optical signal; an optical resonator comprising a rotation axis around which the optical gyroscope is configured to rotate; opto-electronic circuitry comprises at least one optical detector and is configured to receive the at least one optical signal, to optically couple to the optical resonator a gyroscope portion of each of the at least one optical signal, and to receive at least one gyroscope optical signal each of which is derived from the gyroscope portion; wherein the opto-electronic circuitry is further configured to generate, using the at least one gyroscope optical signal, an electronic signal representative of a parameter from which a rate of rotation of the optical gyroscope around the rotation axis; and processing circuitry electrically coupled to the opto-electronic circuitry and configured to receive the electronic signal and to determine the rate of rotation of the optical gyroscope around the rotation axis using the electronic signal; wherein the optical resonator comprises: a first optical waveguide comprising a first input/output port and a first surface; a second optical waveguide comprising a second input/output port and a second surface; wherein at least one of the first and the second input/output ports is configured to receive each of the gyroscope portion of each of the at least one optical signal, and wherein at least one of the first and the second input/output ports is configured to emit each of the at least one gyroscope optical signal; a resonator coil of optical waveguide comprising a first winding optical waveguide comprising a first waveguide port, a second waveguide port, a third surface adjacent and opposite to the first surface, and a fourth surface adjacent and opposite to the second surface, a second winding optical waveguide comprising a third waveguide port and a fourth waveguide port, and a first optical coupler comprising a first coupler port, a second coupler port, a third coupler port, and a fourth coupler port; and wherein the second winding optical waveguide is within a first region surrounded at least in part by the first winding optical waveguide; wherein the first waveguide port is optically coupled to the first coupler port, wherein the second waveguide port is optically coupled to the fourth waveguide port, wherein the third waveguide port is optically coupled to the third coupler port, and wherein the fourth waveguide port is optically coupled to the fourth coupler port; wherein the first optical coupler is configured to optically couple optical energy between the first and the second coupler ports and between the third and the fourth coupler port; wherein the first optical coupler is inserted anywhere in and around the first winding optical waveguide except for where the third surface is adjacent and opposite to the first surface, and where the fourth surface where is adjacent and opposite to the second surface.

Example 13 includes the optical gyroscope of Example 12, wherein the first optical coupler is inserted anywhere in and around the second winding optical waveguide except for where the first optical coupler would overlap another optical coupler optically connected to the second winding optical waveguide.

Example 14 includes the optical gyroscope of any of Examples 12-13, wherein at least a portion of the gyroscope portion of each of the at least one optical signal received at the first or the second input/output port is emitted respectively from the second or the first input/output port.

Example 15 includes the optical gyroscope of any of Examples 12-14, wherein at least one of the first and the second optical waveguides and the first and the second winding optical waveguides comprises planar optical waveguide or optical fiber.

Example 16 includes the optical gyroscope of any of Examples 12-15, wherein the first optical coupler comprises: a first coupler optical waveguide comprising the first coupler port, the fourth coupler port, and a first coupler surface, wherein the first and the third coupler ports are opposite one another on the first coupler optical waveguide; wherein a width of the first coupler optical waveguide adiabatically tapers at or after the first coupler port and at or after the fourth coupler port and towards the first coupler surface; and a second coupler optical waveguide comprising the second coupler port, the third coupler port, and a second coupler surface, wherein the second and the fourth coupler ports are opposite one another on the second coupler optical waveguide; wherein a width of the second coupler optical waveguide adiabatically tapers at or after the second coupler port and at or after the third coupler port and towards the second coupler surface; wherein the first coupler surface is adjacent to and opposite of the second coupler surface.

Example 17 includes the optical gyroscope of any of Examples 12-16, wherein each winding optical waveguide has an oval or an elliptical shape.

Example 18 includes the optical gyroscope of any of Examples 12-17, further comprising: a third winding optical waveguide comprising a seventh waveguide port and an eighth waveguide port; a second optical coupler comprising a fifth coupler port, a sixth coupler port, a seventh coupler port, and an eighth coupler port; and wherein the second winding optical waveguide further comprises a fifth waveguide port and a sixth waveguide port; wherein the fifth waveguide port is optically coupled to the sixth coupler port, and the sixth waveguide port is optically coupled the seventh coupler port; wherein the seventh waveguide port is optical coupled to the fifth coupler port and the eighth waveguide port is optically coupled to the eighth coupler port; wherein the first optical coupler is configured to optically couple an optical signal between the fifth and the sixth coupler ports and between the seventh and the eighth coupler port; wherein the third winding optical waveguide is within a second region surrounded in at least part by the second winding optical waveguide; wherein the second optical coupler is inserted anywhere around the second winding optical waveguide except where the second optical coupler would overlap the first optical coupler.

Example 19 includes the optical gyroscope of Example 18, wherein the second optical coupler comprises: a third coupler optical waveguide comprising the fifth coupler port, the eighth coupler port, and a third coupler surface, wherein the fifth and the eighth coupler ports are opposite one another on the third coupler optical waveguide; wherein a width of the first coupler optical waveguide adiabatically tapers at or after the fifth coupler port and at or after the eighth coupler port and towards the third coupler surface; and a fourth coupler optical waveguide comprising the sixth coupler port, the seventh coupler port, and a fourth coupler surface, wherein the sixth and the seventh coupler ports are opposite one another on the fourth coupler optical waveguide; wherein a width of the fourth coupler optical waveguide adiabatically tapers at or after the sixth coupler port and at or after the seventh coupler port and towards the fourth coupler surface; wherein the third coupler surface is adjacent to and opposite of the fourth coupler surface.

Example 20 includes the optical gyroscope of any of Examples 12-19, wherein the at least one optical signal consists of one optical signal whose width is greater than 1 nm.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An optical resonator comprising:
a first optical waveguide comprising a first input/output port and a first surface;
a second optical waveguide comprising a second input/output port and a second surface;
a resonator coil of optical waveguide comprising a first winding optical waveguide comprising a first waveguide port, a second waveguide port, a third surface adjacent and opposite to the first surface, and a fourth surface adjacent and opposite to the second surface, a second winding optical waveguide comprising a third waveguide port and a fourth waveguide port, and a first optical coupler comprising a first coupler port, a second coupler port, a third coupler port, and a fourth coupler port; and
wherein the second winding optical waveguide is within a first region surrounded at least in part by the first winding optical waveguide;
wherein the first waveguide port is optically coupled to the first coupler port, wherein the second waveguide port is optically coupled to the fourth waveguide port, wherein the third waveguide port is optically coupled to the third coupler port, and wherein the fourth waveguide port is optically coupled to the fourth coupler port;
wherein the first optical coupler is configured to optically couple an optical energy between the first and the second coupler ports and between the third and the fourth coupler port;
wherein the first optical coupler is inserted anywhere in and around the first winding optical waveguide except for where the third surface is adjacent and opposite to the first surface, where the fourth surface where is adjacent and opposite to the second surface.

2. The optical resonator of claim 1, wherein the first optical coupler is inserted anywhere in and around the second winding optical waveguide except for where the first optical coupler would overlap another optical coupler optically connected to the second winding optical waveguide.

3. The optical resonator of claim 1, wherein at least a portion of an optical signal received at the first or the second input/output port is emitted respectively from the second or the first input/output port.

4. The optical resonator of claim 1, wherein at least one of the first and the second optical waveguides and the first and the second winding optical waveguides comprises planar optical waveguide or optical fiber.

5. The optical resonator of claim 1, wherein the first optical coupler comprises:
a first coupler optical waveguide comprising the first coupler port, the fourth coupler port, and a first coupler surface, wherein the first and the third coupler ports are opposite one another on the first coupler optical waveguide;
wherein a width of the first coupler optical waveguide adiabatically tapers at or after the first coupler port and at or after the fourth coupler port and towards the first coupler surface; and
a second coupler optical waveguide comprising the second coupler port, the third coupler port, and a second coupler surface, wherein the second and the fourth coupler ports are opposite one another on the second coupler optical waveguide;
wherein a width of the second coupler optical waveguide adiabatically tapers at or after the second coupler port and at or after the third coupler port and towards the second coupler surface;
wherein the first coupler surface is adjacent to and opposite of the second coupler surface.

6. The optical resonator of claim 1, further comprising:
a third winding optical waveguide comprising a seventh waveguide port and an eighth waveguide port;
a second optical coupler comprising a fifth coupler port, a sixth coupler port, a seventh coupler port, and an eighth coupler port; and
wherein the second winding optical waveguide further comprises a fifth waveguide port and a sixth waveguide port;
wherein the fifth waveguide port is optically coupled to the sixth coupler port, and the sixth waveguide port is optically coupled the seventh coupler port;
wherein the seventh waveguide port is optical coupled to the fifth coupler port and the eighth waveguide port is optically coupled to the eighth coupler port;
wherein the first optical coupler is configured to optically couple optical power between the fifth and the sixth coupler ports and between the seventh and the eighth coupler port;
wherein the third winding optical waveguide is within a second region defined surrounded in at least part by the second winding optical waveguide;
wherein the second optical coupler is inserted anywhere around the second winding optical waveguide except where the second optical coupler would overlap the first optical coupler.

7. The optical resonator of claim 6, wherein the second optical coupler comprises:
a third coupler optical waveguide comprising the fifth coupler port, the eighth coupler port, and a third coupler surface, wherein the fifth and the eighth coupler ports are opposite one another on the third coupler optical waveguide;
wherein a width of the third coupler optical waveguide adiabatically tapers at or after the fifth coupler port and at or after the eighth coupler port and towards the third coupler surface; and
a fourth coupler optical waveguide comprising the sixth coupler port, the seventh coupler port, and a fourth coupler surface, wherein the sixth and the seventh coupler ports are opposite one another on the fourth coupler optical waveguide;
wherein a width of the fourth coupler optical waveguide adiabatically tapers at or after the sixth coupler port and at or after the seventh coupler port and towards the fourth coupler surface;
wherein the third coupler surface is adjacent to and opposite of the fourth coupler surface.

8. A method for decreasing free spectral range in an optical resonator, the method comprising:
optically coupling a portion of an optical signal to a first winding optical waveguide of a resonator coil including at least two winding optical waveguides;
propagating the portion of the optical signal around at least a part of the first winding optical waveguide;
optically coupling a portion of the portion of the optical signal from the first winding optical waveguide to a second winding optical waveguide of the resonator coil;
propagating the portion of the portion of the optical signal around at least a part of the second winding optical waveguide; and
optically coupling a portion of the portion of the portion of the optical signal from the second winding optical waveguide to the first winding optical waveguide.

9. The method of claim 8, wherein the portion of the portion of the optical signal is provided through a series of one or more optical couplers a first of which is configured to receive the portion of the optical signal.

10. The method of claim 8, further comprising:
receiving the optical signal at a first optical waveguide comprising a first surface;
emitting a portion of the portion of the portion of the portion of the optical signal from a second optical waveguide comprising a second surface; and
wherein the first winding optical waveguide comprises a third surface and a fourth surface, wherein the third surface is adjacent and opposite to the first surface and the fourth surface is adjacent and opposite to the second surface;
wherein the optical coupling is performed by an optical coupler is inserted anywhere in and around the first winding optical waveguide except for where the third surface is adjacent and opposite to the first surface, and where the fourth surface where is adjacent and opposite to the second surface.
